# EUROPÄISCHE PATENTSCHRIFT

(11) **EP 2 668 053 B1**
(45) Veröffentlichungstag und Bekanntmachung des Hinweises auf die Patenterteilung: **13.03.2019**
(21) Anmeldenummer: 11704426.3
(22) Anmeldetag: 28.01.2011
(51) Int. Cl.: B60K 1/02, B60K 7/00, B62K 11/10, B62M 11/16, B62M 6/65

(54) **ELEKTROMECHANISCHES WANDLERSYSTEM FÜR ELEKTROFAHRZEUGE**
ELECTROMECHANICAL CONVERTER SYSTEM FOR ELECTRIC VEHICLES
SYSTÈME CONVERTISSEUR ÉLECTROMÉCANIQUE POUR VÉHICULES ÉLECTRIQUES

(43) Veröffentlichungstag der Anmeldung: 04.12.2013
(73) Patentinhaber: Swissmove AG, 6020 Emmenbrücke (CH)
(72) Erfinder: FUCHS, Andreas, CH-3011 Bern (CH)
(74) Vertreter: sgb europe
(86) Internationale Anmeldenummer: PCT/EP2011/051260
(87) Internationale Veröffentlichungsnummer: WO 2012/100838

(56) Entgegenhaltungen:
- EP-A1- 1 601 083
- EP-A1- 1 642 820
- EP-A1- 1 916 444
- EP-A2- 0 937 600
- EP-A2- 0 980 821
- FR-A1- 2 873 090
- JP-A- 2007 327 569
- US-A- 5 778 998
- US-B1- 6 278 216

## Beschreibung

Die Erfindung betrifft ein elektromechanisches Wandlersystem für ein Elektrofahrzeug und insbesondere ein Elektroleichtfahrzeug.

Elektrische bzw. elektromechanische Wandlersysteme für Fahrzeuge sind im Stand der Technik vielfältig bekannt und werden bspw. dazu eingesetzt, elektrische Energie für den Antrieb eines sogenannten Elektrofahrzeuges in mechanische Antriebsenergie umzuwandeln. In einer weiteren Anwendung werden elektromechanische Wandlersysteme in Fahrzeugen verwendet, um aus mechanischer Arbeit elektrische Energie zu erzeugen. Hierzu zählen bspw. Kfz-Generatoren, die aus der Arbeit eines Verbrennungsmotors elektrische Energie zur Versorgung von elektrischen Radantrieben erzeugen (Range Extender).

Aufgrund steigender Energiepreise wurden in jüngster Zeit eine Vielzahl von Fahrzeugtypen weiterentwickelt, wie bspw. Elektroautos, aber auch neuartige Typen vorgestellt, insbesondere im Bereich der Elektroleichtfahrzeuge. Neben Elektrofahrrädern, auch "E-Bikes" genannt, sind mittlerweile auch alltagstaugliche Elektroroller und Elektromofas erhältlich. Diese werde üblicherweise ganz oder teilweise mit elektrischer Energie über ein elektromechanisches Wandlersystem, wie einen Elektromotor, angetrieben.

Ein besonderer Typ eines Elektroleichtfahrzeugs ist ein sog. "Hybrid-E-Bike", welches zwar mindestens teilweise mit elektrischer Energie angetrieben wird, aber üblicherweise unterstützend auch mit Muskelkraft eines Passagiers antreibbar ist. Insbesondere bei dem letztgenannten Fahrzeugtyp können neben elektrischen Antriebsmotoren auch im Generatorbetrieb arbeitende elektromechanische Wandlersysteme zum Einsatz kommen, um die vom Passagier erzeugte mechanische Energie in elektrische Energie umzuwandeln und diese entweder direkt einem Motor zuzuführen oder zwischenzeitlich zu speichern.

Derzeit verfügbare elektromechanische Wandlersysteme sind jedoch nicht optimal für den Einsatz in einem Elektrofahrzeug und insbesondere in einem Elektroleichtfahrzeug angepasst und weisen einen meist nur unzureichenden Wirkungsgrad auf. Jedoch bestimmt insbesondere der Wirkungsgrad die in der Praxis relevante Reichweite des Fahrzeugs.

Übliche Wandlersysteme, wie bspw. Radnabenmotoren, erzeugen in Betrieb konstruktionsbedingt hohe Temperaturen, was in einem hohen Wartungsaufwand bei einer kurzen Lebensdauer des Wandlersystems resultiert.

Die gattungsgemäße JP 2007327569 A offenbart eine Radantriebsvorrichtung mit einem elektrischen Motor mit einem an einem Fahrzeugrahmen außerhalb einer Radebene angeflanschten Traggehäuse, in dem ein Motor mit Rotor und Stator aufgenommen ist. Eine Rotorwelle ist einerseits in dem Traggehäuse und andererseits im Fahrzeugrahmen gelagert. Eine gegenüber der Rotorwelle rotierbar gelagerte Radnabe ist über eine Kraftübertragungsvorrichtung in Form eines Planetengetriebes mit dem Rotor drehmomentübertragend gekoppelt.

Es besteht daher die Aufgabe, ein elektrisches Wandlersystem für Fahrzeuge zu schaffen, welches an die technischen Anforderungen bei Elektrofahrzeugen und insbesondere bei Elektroleichtfahrzeugen angepasst ist, eine leichte Wartung ermöglicht und eine hohe Lebensdauer aufweist.

Die Aufgabe wird gelöst durch ein elektrisches Wandlersystem gemäß Anspruch 1 und ein elektrisches Fahrzeug gemäß Anspruch 13. Die Unteransprüche beschreiben bevorzugte Ausführungen der Erfindung.

Ein Kernaspekt der Erfindung ist die besondere Anordnung mindestens eines elektromechanischen Energiewandlers in einem Traggehäuse mit mindestens einem ersten und zweiten axialen Abschnitt, wobei der erste Abschnitt quer zu einer Antriebsachse einen größeren Durchmesser als der zweite Abschnitt aufweist. Der Energiewandler ist mit einen Stator und einen Rotor ausgebildet, wobei der Stator und der Rotor mindestens teilweise im ersten Abschnitt angeordnet sind. Der zweite Abschnitt ist zur Lagerung des Rotors bzw. eines Anschlusselements ausgebildet.

Es ist hierdurch möglich, die im Betrieb des Energiewandlers vorwiegend im Stator entstehende thermische Energie in vorteilhafter Weise über eine große Oberfläche des Traggehäuses abzuführen, während der zweite Abschnitt an die Lagerung des Rotors und/oder Anschlusselements angepaßt ist. So ist es bspw. vorteilhaft möglich, besonders kostengünstige und/oder wartungsarme Lager zu verwenden.

Das erfindungsgemäße Wandlersystem erlaubt somit eine verbesserte Wärmeabfuhr bei gleichzeitig reduzierten Herstellungskosten. Aufgrund der verbesserten Wärmeabfuhr ist ferner vorteilhaft der Wartungsaufwand reduziert, da sämtliche Teile des Wandlersystems weniger thermisch belastet sind. Dies ist insbesondere dann vorteilhaft, wenn Energiewandler und/oder Kraftübertragungsvorrichtung mit Schmiermitteln betrieben sind, da bei geringerer thermischer Belastung das Schmiermittel optimal auf einen hohen Wirkungsgrad eingestellt werden kann.

Im Rahmen der vorliegenden Erfindung wird unter einem Elektrofahrzeug ein ein- oder mehrspuriges, mindestens teilweise elektrisch angetriebenes Fahrzeug und insbesondere ein Straßenfahrzeug verstanden. Bevorzugt ist das elektrische Fahrzeug ein Elektroleichtfahrzeug, wie bspw. ein elektrisches Zwei- oder Dreirad, bzw. ein Elektrofahrrad, Pedelec, Roller, Rollstuhl, Quad oder Kart. Insbesondere bevorzugt ist ein Elektroleichtfahrzeug mit einem Leergewicht von nicht mehr als 500 kg, weiter bevorzugt nicht mehr als 100 kg einschließlich Batterien.

Erfindungsgemäß weist das Wandlersystem ein Traggehäuse zur Verbindung mit dem Fahrzeug auf. Das Traggehäuse nimmt mindestens teilweise einen elektromechanischen Energiewandler mit mindestens einem Rotor und einem Stator auf und ist, wie eingangs diskutiert, zur Verbindung mit dem Fahrzeug ausgebildet. Entsprechend kann das Traggehäuse bspw. zur Schraub-, Steck- oder Schweißverbindung mit dem Elektrofahrzeug bzw. mit dem Rahmen oder der Karosserie des Fahrzeugs ausgebildet sein.

Der mindestens eine elektromechanische Energiewandler dient der Umwandlung von elektrischer in mechanische Energie und/oder der Umwandlung von mechanischer in elektrische Energie. Der elektromechanische Energiewandler kann daher bevorzugt ein oder mehrere elektrische Maschinen, wie Elektromotoren und/oder Generatoren aufweisen. Naturgemäß ist es nicht notwendig, dass der elektromechanische Energiewandler sowohl im Generatorbetrieb, in welchem elektrische Energie aus mechanischer Energie erzeugt wird, als auch im Motorbetrieb, in welchem aus elektrischer Energie mechanische Energie erzeugt wird, arbeiten kann, wobei dies entsprechend der jeweiligen Anwendung besonders bevorzugt sein kann.

Der mindestens eine Rotor ist gegenüber dem Stator um eine Antriebsachse drehbar angeordnet und ist mit einer Kraftübertragungsvorrichtung verbunden, die den Rotor mit einem Anschlusselement verbindet. Hierbei kann die Kraftübertragungsvorrichtung jegliche geeignete Ausgestaltung aufweisen, um ein Drehmoment von dem Rotor auf das Anschlusselement und/oder von dem Anschlusselement auf den Rotor zu übertragen.

Das Anschlusselement dient als An- und/oder Abtrieb des Wandlersystems und kann ebenfalls jede geeignete Ausgestaltung aufweisen. Naturgemäß sollte Material und Ausgestaltung entsprechend der in der jeweiligen Anwendung auftretenden Kräfte gewählt werden. Das Anschlusselement kann bspw. eine Welle und/oder Flansch umfassen und ist bevorzugt mindestens teilweise außerhalb des Traggehäuses angeordnet, um eine leichte Verbindung mit weiteren Komponenten des Fahrzeugs zu erlauben.

Insbesondere bevorzugt ist das Anschlusselement zur Verbindung mit einer Radanordnung, wie einer Nabe eines Antriebs- bzw. Laufrades für ein Elektrofahrzeug ausgebildet, bspw. im Falle des Einsatzes des Systems als Antrieb. Besonders bevorzugt ist das Anschlusselement integral mit einer Radnabe ausgebildet. In diesem Falle kann das Anschlusselement zweckmäßig mit einer bspw. mechanischen, hydraulischen oder elektromagnetischen Bremsvorrichtung ausgebildet sein.

Alternativ kann das Anschlusselement zur Verbindung mit einer Tretlagerwelle ausgebildet sein, bspw. im Falle des Einsatzes als Tretlagergenerator bzw. -motor. Zweckmäßig ist das Anschlusselement hier integral mit der Tretlagerwelle ausgebildet. Bevorzugt kann das Anschlusselement eine oder mehrere Kettenräder oder Zahnscheiben aufweisen, so dass ein Antrieb einer Radanordnung des Elektrofahrzeugs bspw. über eine Kette oder einen Zahnriemen erfolgen kann.

Erfindungsgemäß weist das Traggehäuse mindestens einen ersten axialen Abschnitt und einen zweiten axialen Abschnitt auf, wobei der erste axiale Abschnitt in einer Richtung, quer bzw. senkrecht zur Antriebsachse, einen größeren Durchmesser als der zweite Abschnitt aufweist. Der erste und zweite Abschnitt sind in einer Richtung, parallel zur Antriebsachse, d.h. axial angeordnet.

Der Stator sowie der Rotor des Energiewandlers sind mindestens teilweise im ersten Abschnitt des Traggehäuses angeordnet. Der zweite Abschnitt ist zur Lagerung des Rotors und/oder des Anschlusselements ausgebildet und kann bspw. eine Lagereinheit, wie ein Wälz- bzw. Radiallager aufweisen.

Die vorstehend beschriebene Anordnung aus Energiewandler, Kraftübertragungsvorrichtung und Anschlusselement ermöglicht einen konstruktiv einfachen und damit kostengünstigen Aufbau. Ferner ermöglicht die Ausbildung des Traggehäuses mit mindestens einem ersten Abschnitt und einem zweiten Abschnitt mit unterschiedlichem Durchmesser eine besonders gute Kühlbarkeit, da der vergrößerte Durchmesser des ersten Abschnitts in einer vergrößerten Oberfläche des Traggehäuses im Bereich des Stators resultiert. Da Wärme im elektromechanischen Energiewandler vorwiegend im Bereich des Stators entsteht, erlaubt die Anordnung somit eine gute Kühlung des elektromechanischen Wandlers, während gleichzeitig der zweite Abschnitt eine optimale Lagerung des Rotors und/oder Anschlusselements ermöglicht.

Bspw. kann somit bei gegebenem Energiewandler die Leistung eines Radantriebs in Bezug auf das maximale Drehmoment erhöht werden. Hierdurch ist bspw. die Nutzlast hinsichtlich der Zugkraft eines Anhängers, aber auch die Kletter-/Steigfähigkeit eines entsprechenden Elektrofahrzeuges in vorteilhafter Weise verbessert.

Wie bereits eingangs diskutiert, kann der elektromechanische Energiewandler sämtliche geeignete Vorrichtungen umfassen, die elektrische Energie in mechanische Energie oder mechanische Energie in elektrische Energie umwandelt.

Der Stator des Energiewandlers ist, wie eingangs diskutiert, mindestens teilweise im ersten Abschnitt des Traggehäuses angeordnet. Um eine verbesserte Wärmeabfuhr zu erreichen ist der Stator bevorzugt vollständig im ersten Abschnitt angeordnet.

Je nach Ausbildung des elektromechanischen Energiewandlers kann der Stator bspw. mit permanentmagnetischen Polschuhen oder Elektromagneten bzw. Spulen ausgebildet sein, um im Betrieb ein entsprechendes Magnetfeld zu erzeugen. Der Rotor kann bspw. eine oder mehrere Spulenanordnungen aufweisen, die ggf. mit einer mechanischen Kommutatoranordnung verbunden sind. Bevorzugt ist der Rotor mit permanentmagnetischen Elementen ausgebildet. Hierdurch kann der Wandler mit einer elektronischen Kommutierung, d. h. ohne Bürsten, betrieben werden. Naturgemäß kann der Rotor ferner eine oder mehrere Lageranordnungen umfassen, mit welchen der Rotor am Traggehäuse befestigt bzw. gelagert ist.

Bevorzugt weist der elektromechanische Energiewandler mindestens einen Motor und/oder Generator auf. Naturgemäß sollte ein entsprechender Motor bzw. Generator an die spezifischen Anforderungen des Elektrofahrzeugs, insbesondere hinsichtlich der Leistung, angepasst sein.

Der erfindungsgemäße elektromechanische Energiewandler kann bspw. als Axial-fluss, als Transversalfluss- oder Radialflussmaschine ausgebildet sein. Innen- oder Außenläuferanordnungen sind denkbar, wobei aus Gründen der Wärmeabfuhr eine Innenläuferausbildung bevorzugt ist, d.h. eine Ausbildung, bei der der hohlzylinderförmige Stator den Rotor in einer Richtung, senkrecht zur Antriebsachse, umgibt. Insbesondere bevorzugt ist der Energiewandler als bürstenlose Gleichstrom- (BDLC) oder Synchronmaschine (PMSM) ausgebildet. Ebenso ist ein Einsatz einer sogenannten "eisenlosen" Maschine, bspw. einer Maschine mit eisenlosem Stator, denkbar, um auf mechanische Freiläufe verzichten zu können und effiziente elektronische Freiläufe zu ermöglichen.

Weist der elektromechanische Energiewandler mehrere Motoren auf, können deren Phasen je nach Anwendung parallel oder in Serie geschaltet sein. Zweckmäßig weist der elektromechanische Energiewandler eine Steuerungseinrichtung auf, um den Betrieb des Wandlers zu steuern und einen möglichst hohen Wirkungsgrad zu gewährleisten.

Die Steuerungseinrichtung kann bspw. für einen Ein- oder Mehrquadrantenbetrieb (1 bis 4 Quadranten) ausgebildet sein, wobei im Falle eines Mehrquadrantenbetriebs sowohl ein Motor- als auch ein Generatorbetrieb ermöglicht ist. Hierdurch ist das Wandlersystem besonders flexibel einsetzbar.

Alternativ oder ergänzend kann die Steuerungseinrichtung zur elektronischen Kommutierung ausgebildet sein. Hierzu kann die Steuerungseinrichtung zweckmäßig mindestens einen Rotorlagesensor, wie einen Hall-Sensor bzw. "Magnetic Hall Encoder", umfassen.

Die Steuerungseinrichtung kann ferner ausgebildet sein, um einen elektronischen Freilauf des Energiewandlersystems zu erlauben. Hierbei wird, bspw. im Falle eines Motors, dieser in einem Modus mit niedriger Antriebsleistung an einem Arbeitspunkt mit besonders niedriger Verlustleistung betrieben.

Ebenso kann die Steuerungseinrichtung im Falle von mehreren Motoren/Generatoren zum schaltbaren Verbinden einzelner Maschinen mit dem Anschlusselement ausgebildet sein, bspw. mittels einer elektromagnetischen Kupplung. Eine derartige Ausbildung erlaubt ferner eine Lastverteilung, insbesondere im Falle von unterschiedlichen Motoren/Generatoren bzw. solchen mit unterschiedlichen Arbeitspunkten.

Die Steuerungseinrichtung kann integral mit dem elektromechanischen Wandler ausgebildet sein. Bevorzugt ist die Steuerungseinrichtung über eine Steckverbindung mit dem Wandler verbunden, um im Wartungsfall eine einfache Demontage zu ermöglichen.

Wie bereits eingangs diskutiert, ist das Traggehäuse erfindungsgemäß zur Verbindung mit dem Fahrzeug ausgebildet und nimmt mindestens teilweise den elektromechanischen Energiewandler mit Rotor und Stator, bspw. in einem entsprechenden Hohlraum auf. Das Traggehäuse selbst kann entsprechend an die jeweilige Konstruktion des Fahrzeugs angepaßt sein und bspw. rechteckig ausgeführt sein. Bevorzugt ist das Traggehäuse jedoch im Wesentlichen zylindrisch ausgebildet und weiter bevorzugt mit seiner Längsachse parallel zur eingangs erwähnten Antriebsachse ausgerichtet. Zweckmäßig ist das Traggehäuse entlang der Antriebsachse symmetrisch bzw. rotationssymme -trisch ausgebildet.

Da das Traggehäuse jedoch nicht notwendigerweise vollständig zylindrisch ausgeführt sein muß, wird im Rahmen der vorliegenden Erfindung unter dem Begriff des Durchmessers des ersten und zweiten Abschnitts die jeweilige maximale Längenausdehnung des jeweiligen Abschnitts in einer radialen Richtung, somit senkrecht zur Antriebsachse, verstanden.

Das Traggehäuse kann aus jedem geeigneten Material gebildet sein, bspw. Stahl, Aluminium, Gussmaterial oder Verbundmaterialien. Bevorzugt ist das Traggehäuse aus rostfreiem Stahl gebildet. Das Traggehäuse kann ein- oder mehrteilig ausgebildet sein, wobei bevorzugt das Traggehäuse und insbesondere der erste und zweite Abschnitt integral ausgebildet sind.

Das Traggehäuse kann eine oder mehrere Öffnungen zur Kühlung und/oder zur Durchführung von Bauteilen, wie bspw. einer Welle oder elektrischen Leitungen, aufweisen. Bevorzugt ist das Traggehäuse jedoch im Betrieb im Wesentlichen geschlossen ausgeführt, um Verschmutzungen der beweglichen Teile zu vermeiden. Im letztgenannten Fall sollte das Traggehäuse zweckmäßig mit einem Hohlraum zur mindestens teilweisen Aufnahme von Rotor und Stator ausgebildet sein. Bevorzugt ist der Hohlraum mindestens abschnittsweise im ersten Abschnitt des Traggehäuses gebildet.

Zweckmäßig kann das Traggehäuse alternativ oder ergänzend mit Kühlelementen bzw. - rippen oder -blechen, insbesondere außenseitig am ersten Abschnitt, ausgebildet sein, um die Wärmeabfuhr nochmals zu verbessern.

Neben dem elektromechanischen Energiewandler kann das Traggehäuse naturgemäß weitere Komponenten aufnehmen, wie bspw. die eingangs diskutierte Kraftübertragungsvorrichtung und/oder eine Steuerungseinrichtung für den Energiewandler.

Der erste und der zweite Abschnitt sind, wie eingangs diskutiert, axial angeordnet. Hierbei können die Abschnitte entlang der Antriebsachse grundsätzlich, ggf. durch einen weiteren Abschnitt, beabstandet angeordnet sein, wobei es bevorzugt ist, dass der erste und der zweite Abschnitt des Traggehäuses axial nebeneinander angeordnet sind.

Die Abmessungen des ersten und zweiten Abschnitts des Traggehäuses sollte entsprechend der jeweiligen Anwendung gewählt sein, wobei der Durchmesser des ersten Abschnitts zweckmäßig groß sein sollte, um eine möglichst gute Wärmeabfuhr zu erlauben. Im Falle des Einsatzes des Systems als Antrieb eines E-Bikes kann der Durchmesser bevorzugt zwischen 5-10 cm gewählt sein. Der zweite Abschnitt weist, wie eingangs diskutiert, einen kleineren Durchmesser als der erste Abschnitt auf, wobei der Durchmesser des zweiten Abschnitts bevorzugt 25 - 50 % des Durchmessers des ersten Abschnitts beträgt.

Zweckmäßig weist der erste Abschnitt des Traggehäuses Befestigungsmittel zur Verbindung mit dem Elektrofahrzeug auf. Neben einer verbesserten Stabilität der gesamten Konstruktion ermöglicht die vorliegende bevorzugte Ausbildung der Erfindung ferner eine nochmals verbesserte Kühlung des elektromechanischen Energiewandlers, da die erzeugte Wärme nicht nur an die Außenluft, sondern teilweise auch über den Fahrzeugrahmen sowie ggf. am Traggehäuse befestigte Komponenten, wie ein Seitenständer, abgeführt werden kann. Naturgemäß sollte die Verbindung bevorzugt einen guten thermischen Kontakt bereitstellen.

Die Befestigungsmittel können sämtliche geeignete Ausgestaltungen aufweisen und können insbesondere durch eine oder mehrere Schraubverbindungen oder entsprechende Bohrungen gebildet sein. Die Befestigungsmittel können integral mit dem Traggehäuse bei dessen Fertigung gebildet sein oder nachträglich, bspw. über Schweißverbindungen, mit diesem verbunden sein. Zweckmäßig sind die Befestigungsmittel zur Verbindung mit einem Ausfallende eines Fahrzeugrahmens ausgebildet.

Bevorzugt weist der zweite Abschnitt des Traggehäuses eine axiale Durchgangsöffnung und der Rotor eine Rotorwelle auf, wobei sich die Rotorwelle durch die Durchgangsöffnung erstreckt.

Die vorliegende Ausführung erlaubt eine einfache Verbindung des Rotors mit der Kraftübertragungsvorrichtung über die durch die Öffnung geführte Rotorwelle. Hierbei dient die Rotorwelle der Übertragung eines Drehmoments zwischen Energiewandler und Kraftübertragungsvorrichtung.

Der Rotor kann in diesem Zusammenhang zweckmäßig mit einem im ersten Abschnitt angeordneten und mit der Rotorwelle verbundenen, ggf. zylindrischen Rotorrad ausgebildet sein. Das Rotorrad dient hierbei im Betrieb der Erzeugung eines magnetischen Feldes, d.h. es kann je nach Aufbau des Energiewandlers mindestens eine elektrische Spule und/oder einen Magneten aufweisen. Im Falle einer IPM-Maschine sind die Magnete zweckmäßig in einer Rotorblechung eingelassen.

Bevorzugt ist der Durchmesser der Rotorwelle kleiner als der Durchmesser des Rotorrades, damit die Wärmeleitung vom Energiewandler in Richtung der Kraftübertragungsvorrichtung möglichst gering ist. Insbesondere bevorzugt entspricht der Durchmesser der Rotorwelle maximal der Hälft des Durchmessers des Rotorrades. Im Falle des Einsatzes des Systems als Antrieb eines E-Bikes kann der Durchmesser der Rotorwelle bspw. 1 - 2 cm betragen.

Wie eingangs erwähnt, ist der zweite Abschnitt des Traggehäuses zur Lagerung des Rotors und/oder des Anschlusselements ausgebildet. Nach einer bevorzugten Weiterbildung der Erfindung weist der zweite Abschnitt mindestens eine radiale Außenfläche auf, die zur Lagerung des Anschlusselements ausgebildet ist.

Hierbei wird unter der Außenfläche des zweiten Abschnitts eine radial der axialen Durchgangsöffnung gegenüberliegende Fläche des Traggehäuses verstanden. Die radiale Außenfläche ist bevorzugt parallel zur Antriebsachse angeordnet und besonders bevorzugt zylindrisch ausgebildet. Zweckmäßig ist die radiale Außenfläche koaxial mit der Antriebsachse angeordnet.

Eine derartige Anordnung verbessert die Stabilität des Systems weiter, insbesondere da auf das Anschlusselement etwaig wirkende Querkräfte sicher abgetragen werden können. Dies ist insbesondere im Falle des Einsatzes des Systems als Tretgenerator aufgrund der im Betrieb pendelnden Tretbewegung vorteilhaft.

Zweckmäßig ist mindestens eine erste Lagereinheit vorgesehen, die das Anschlusselement drehbar am zweiten Abschnitt des Traggehäuses und insbesondere an der radialen Außenfläche lagert. Der vergleichsweise kleine radiale Durchmesser des zweiten Abschnitts erlaubt hierbei einen Einsatz von Lagereinheiten mit kleinem Durchmesser, was die Herstellungskosten des Wandlersystems weiter reduziert, während die außenseitige Anordnung am Traggehäuse die Stabilität der Konstruktion vorteilhaft weiter erhöht.

Die Lagereinheit kann sämtliche geeignete Ausgestaltungen aufweisen, bevorzugt ist die Lagereinheit ein Wälzlager, insbesondere ein Radiallager. Zweckmäßig ist die Lagereinheit koaxial mit der Antriebsachse angeordnet.

Die Kraftübertragungsvorrichtung ist mit dem Rotor des Energiewandlers und mit dem Anschlusselement zur Übertragung eines Drehmoments verbunden. Die Kraftübertragungsvorrichtung kann hierzu, wie bereits eingangs diskutiert, sämtliche geeignete Ausgestaltungen aufweisen und entsprechend mit dem Rotor bzw. der Rotorwelle des Energiewandlers verbunden sein.

Bevorzugt sind die Kraftübertragungsvorrichtung und der elektromechanische Energiewandler entlang der Antriebsachse derart angeordnet, dass sich die Rotorwelle axial in die Kraftübertragungsvorrichtung erstreckt. Eine derartige Anordnung erlaubt eine besonders kompakte Bauform des vorliegenden Wandlersystems und ist daher äußerst vorteilhaft.

Bei entsprechender Ausbildung der Rotorwelle kann die Kraftübertragungsvorrichtung hierbei axial neben dem zweiten Abschnitt des Traggehäuses angeordnet sein, so dass die Rotorwelle durch die eingangs erwähnte axiale Durchgangsöffnung im Traggehäuse die Kraftübertragungsvorrichtung mit dem Rotor bzw. dem Rotorrad verbindet. Bevorzugt ist die Kraftübertragungsvorrichtung im Bereich des zweiten Abschnitts des Traggehäuses angeordnet.

Wie bereits vorstehend erwähnt, kann die Kraftübertragungsvorrichtung sämtliche geeignete Ausgestaltungen aufweisen. Zweckmäßig weist die Kraftübertragungsvorrichtung mindestens ein Getriebe auf. Das Getriebe weist eine an die jeweilige Anwendung angepasste Über- bzw. Untersetzung auf und ermöglicht so einen nochmals verbesserten Wirkungsgrad, da der Betriebsdrehzahlbereich auf den Arbeitspunkt des Energiewandlers abgestimmt werden kann. Für eine Anwendung in einem Elektrofahrzeug kann das Getriebe zweckmäßig eine Untersetzung von ca. 1:10 bis ca. 1:30, bevorzugt 1:12 bis 1:21 und besonders bevorzug bis 1:18 aufweisen.

Das Getriebe kann hierbei ein oder mehrere Getriebestufen aufweisen und/oder als Schaltgetriebe ausgebildet sein. Das Getriebe kann bspw. als Zahnriemengetriebe ausgebildet sein. Alternativ oder ergänzend kann das Getriebe als CVT-Getriebe (Kontinuierlich verstellbares Getriebe) ausgebildet sein und/oder eine mechanische oder elektronische Kupplung umfassen. Die Steuerung eines elektronischen Schaltgetriebes und/oder einer elektronischen Kupplung kann bevorzugt durch die eingangs erwähnte Steuerungseinrichtung erfolgen.

Nach einer bevorzugten Weiterbildung der Erfindung weist die Kraftübertragungsvorrichtung ein Planetengetriebe auf. Das Planetengetriebe weist bevorzugt mindestens ein axial angeordnetes Sonnenrad auf und kann des Weiteren eine oder mehrere Getriebestufen aufweisen. Das Planetengetriebe kann bspw. als Planeten-Reihengetriebe oder Planeten-Stufengetriebe ausgebildet sein. Insbesondere bevorzugt ist ein einstufiges Stufen-Planetengetriebe, somit ein Getriebe mit insgesamt zwei Getriebestufen, aber ggf. nur einer Wälzlagerung pro Planetensatz.

Das Sonnenrad kann scheibenförmig oder zylindrisch ausgebildet sein. Neben dem Sonnenrad weist das Planetengetriebe ein einzelnes oder mehrere Planetenräder und/oder ein Hohlrad auf, wobei Sonnenrad und Planetenrad sowie Planetenrad und Hohlrad in Eingriff miteinander sind, um ein Drehmoment zu übertragen. Je nach Anordnung können die Zahnräder, d. h. Sonnenrad, Planetenräder sowie Hohlrad mit einer Außen- und/oder Innenverzahnung ausgebildet sein. Das mindestens eine Planetenrad kann an einem feststehenden oder drehenden Planetenträger drehbar gelagert sein.

Nach einer bevorzugten Weiterbildung der Erfindung sind Rotor und Sonnenrad integral ausgebildet. Hierdurch wird der Aufbau des Wandlersystems weiter vereinfacht. Das Sonnenrad kann bspw. mittels einer flexiblen Kupplung mit dem Rotor verbunden sein, damit bei der Verbiegung des Wandlers wegen eines nicht steifen Fahrzeugrahmens die Lager nicht klemmen.

Zweckmäßig sind Rotor und Sonnenrad mindestens teilweise hohl ausgebildet, wodurch ein reduziertes Gewicht des Wandlersystems erreicht wird. Ferner können entsprechende Hohlräume bspw. zur Durchführung von elektrischen Anschlusskabeln, Wellen oder zur weiter verbesserten Kühlung mittels Durchströmung mit einem Fluid, wie bspw. Luft dienen.

Bei dem Einsatz des Planetengetriebes sind verschiedene Anordnungen hinsichtlich An- und Abtrieb denkbar, die im Nachfolgenden erläutert werden. Nach einer vorteilhaften Weiterbildung der Erfindung ist das Wandlersystem ein Radantriebssystem für Elektrofahrzeuge, insbesondere für Elektroleichtfahrzeuge.

Insbesondere bei einer derartigen Ausbildung ist es zweckmäßig, wenn das Anschlusselement ein koaxial zum Sonnenrad angeordnetes Hohlrad aufweist, welches zur Übertragung eines Drehmoments mit dem Sonnenrad ggf. über mindestens ein Planetenrad in Eingriff steht. Bevorzugt kann das Hohlrad Befestigungsmittel zur Verbindung mit einer Radanordnung des Elektrofahrzeugs, wie bspw. einer Nabe eines Antriebs- oder Laufrades, aufweisen. Alternativ oder ergänzend kann das Hohlrad integral mit der Nabe bzw. einem Nabenkörper ausgebildet sein.

Es ist somit möglich, die Kraftübertragungsvorrichtung im Wesentlichen koaxial mit der Radanordnung des Elektrofahrzeugs auszubilden, wodurch eine sehr kompakte Anordnung gegeben ist. Die dadurch resultierende Anordnung des Energiewandlers entlang der Antriebsachse, jedoch seitlich außerhalb der Radebene, ist äußerst vorteilhaft, da somit im Betrieb eine sehr gute Kühlung gegeben ist.

Im vorliegenden Falle des Einsatzes des Wandlersystems als Radantriebssystem für ein Elektrofahrzeug erfolgt der Antrieb über den als Motor ausgebildeten Energiewandler und somit über das mit dem Rotor verbundene Sonnenrad. Das Sonnenrad kann direkt zur Übertragung eines Drehmoments geeignet mit dem Hohlrad verbunden sein, bevorzugt ist das Sonnenrad jedoch mit mindestens einem Planetenrad und das Planetenrad mit dem Hohlrad verbunden, um ein Drehmoment zu übertragen.

Das Planetenrad kann hierbei, wie eingangs erwähnt, auf einem Planetenträger drehbar gelagert sein, wobei die jeweilige Drehachse zweckmäßig parallel zur Antriebsachse ist. Bevorzugt ist der Planetenträger mit dem Traggehäuse und insbesondere bevorzugt mit dem zweiten Abschnitt des Traggehäuses fest verbunden. Somit ergibt sich eine Untersetzung von dem mit dem Sonnenrad verbundenen Rotor auf das Fahrzeugrad.

Wie eingangs diskutiert, ist das erfindungsgemäße Wandlersystem flexibel einsetzbar. Neben einer Ausbildung als ein mit einer Radanordnung direkt verbundenem Antriebssystem kann das Wandlersystem alternativ als Tretlagergenerator und/oder -motor, insbesondere für ein Serie Hybrid Elektrofahrzeug eingesetzt werden.

Insbesondere bei Einsatz des Systems als Tretlagergenerator bzw. -motor kann das Planetengetriebe ausgebildet sein, um ein Kraft- bzw. ein Drehmoment zwischen Sonnenrad und dem als Planetenträger ausgebildeten Anschlusselement zu übertragen. Zweckmäßig ist in diesem Fall das Hohlrad bevorzugt am Traggehäuse befestigt und der Planetenträger am zweiten Abschnitt des Traggehäuses drehbar gelagert.

Bei einem Einsatz als Tretgenerator treibt eine per pedes bedienbare Tretpedalachse mit entsprechenden Tretpedalen bspw. den Planetenträger an. Die Planetenräder laufen auf dem innenverzahnten Hohlrad ab und treiben das Sonnenrad an, so dass ein Drehmoment zwischen dem Anschlusselement mit Tretpedal und dem Sonnenrad am Rotor des Energiewandlers übertragen werden kann.

Bevorzugt weist der Rotor einen axialen Hohlraum auf. Insbesondere bevorzugt umfasst das Anschlusselement eine Antriebswelle, die mindestens abschnittsweise im Hohlraum angeordnet ist. Zweckmäßig ist der axiale Hohlraum durchgehend, d. h. als Durchgangsöffnung, durch Rotor und Traggehäuse ausgebildet. Es ist somit möglich, bspw. für den Einsatzzweck in einem Tretgenerator, die Antriebswelle bzw. die Tretpedalachse in einfacher Weise durch das Traggehäuse und die Kraftübertragungsvorrichtung zu führen, wodurch eine äußerst kompakte Bauform des Wandlersystems gegeben ist. Insbesondere bevorzugt weist das Anschlusselement zwei mit der Antriebswelle verbundene Tretpedale auf.

Nach einer bevorzugten Weiterbildung der Erfindung weist das Traggehäuse einen dritten axialen Abschnitt mit mindestens einer zweiten Lagereinheit auf. Die zweite Lagereinheit lagert die Antriebswelle drehbar an dem dritten Abschnitt. Wie zuvor ausgeführt, ist auch die zweite Lagereinheit bevorzugt als Wälzlager ausgeführt.

Die vorliegende Anordnung erlaubt eine besonders robuste Ausführung des Wandlersystems, da etwaige im Betrieb auftretende Querkräfte sicher abgetragen werden können. Bevorzugt ist die zweite Lagereinheit koaxial mit der Antriebsachse auf einer radialen Außenseite des dritten Abschnitts des Traggehäuses angeordnet.

Die Anordnung der einzelnen Abschnitte des Traggehäuses entlang der Antriebsachse ist grundsätzlich beliebig und kann entsprechend der jeweiligen Anwendung gewählt sein. Zweckmäßig ist der dritte Abschnitt an einer axial der Kraftübertragungsvorrichtung gegenüberliegenden Seite des Traggehäuses angeordnet. Hierdurch wird die Antriebswelle axial beidseitig des elektromechanischen Energiewandlers gelagert, wodurch das System in der vorliegenden Weiterbildung äußerst robust ist.

Nach einer bevorzugten Weiterbildung der Erfindung weist das Wandlersystem ein erstes und ein zweites Traggehäuse mit jeweils einem Energiewandler auf. Die Traggehäuse sind entlang der Antriebsachse angeordnet und sind durch die Kraftübertragungsanordnung beabstandet, d.h. das erste und zweite Traggehäuse sind entlang der Antriebsachse an der Kraftübertragungsvorrichtung gegenüberliegend angeordnet.

Die Ausbildung des Wandlersystems gemäß der vorliegenden bevorzugten Ausführung ist bspw. bei einer Anwendung als Radantriebssystem vorteilhaft, um das maximale Drehmoment des Antriebs zu vergrößern. Alternativ können bei einer geforderten Leistung kleinere Energiewandler eingesetzt werden, was eine weiter verkleinerte Bauform des Wandlersystems ermöglicht.

Hierbei können das erste und zweite Traggehäuse, die zugehörigen zwei Energiewandler sowie die Kraftübertragungsvorrichtung wie vorstehend beschrieben ausgebildet sein, wobei es nicht notwendig ist, dass Traggehäuse und/oder die Energiewandler in jedem Falle identisch aufgebaut sind. Beispielsweise ist es denkbar, dass der erste Energiewandler eine vom zweiten Energiewandler unterschiedliche Leistung aufweist. Somit kann Antriebsleistung, je nach zu beförderndem Gewicht oder entsprechend der Steigung, vorteilhaft durch Zu- und Wegschalten einzelner Energiewandler gesteuert werden, wodurch der Wirkungsgrad des Wandlersystems weiter erhöht wird.

Zweckmäßig sind das erste und zweite Traggehäuse derart angeordnet, dass sich die Rotorwellen der jeweiligen Energiewandler in die Kraftübertragungsvorrichtung erstrecken. Hierzu sollten sich die Traggehäuse entsprechend mit dem jeweiligen zweiten Abschnitt an der Kraftübertragungsvorrichtung gegenüberliegen.

Bevorzugt weisen die im ersten und zweiten Traggehäuse angeordneten Energiewandler einen integral ausgebildeten Rotor auf. Hierbei kann insbesondere ein erstes Rotorrad im ersten Abschnitt des ersten Traggehäuses angeordnet sein und ein zweites Rotorrad im zweiten Abschnitt des zweiten Traggehäuses angeordnet sein. Besonders bevorzugt ist der Rotor ferner integral mit dem mindestens einen Sonnenrad ausgebildet.

Ein Elektrofahrzeug, insbesondere ein Elektro-Leichtfahrzeug, weist mindestens ein Wandlersystem auf. Hierbei ist das Wandlersystem mit einem Traggehäuse zur Verbindung mit dem Fahrzeug, einem mindestens teilweise im Traggehäuse angeordneten elektromechanischem Energiewandler und einer Kraftübertragungsvorrichtung ausgebildet. Der Energiewandler hat mindestens einen Stator sowie einen um eine Antriebsachse gegenüber dem Stator drehbaren Rotor. Die Kraftübertragungsvorrichtung verbindet den Rotor mit einem Anschlusselement. Das Traggehäuse weist mindestens einen ersten axialen Abschnitt und einen zweiten axialen Abschnitt auf, wobei der erste Abschnitt in einer Richtung quer zur Antriebsachse einen größeren Durchmesser aufweist als der zweite Abschnitt. Der zweite Abschnitt ist zur Lagerung des Rotors und/oder des Anschlusselements ausgebildet; Stator und Rotor des Energiewandlers sind im ersten axialen Abschnitt angeordnet.

Hinsichtlich der Ausbildung der einzelnen Komponenten des erfindungsgemäßen Elektrofahrzeugs wird auf die vorstehende Beschreibung bevorzugter Ausführungsformen des Wandlersystems Bezug genommen.

Die Erfindung wird nachstehend anhand von Ausführungsbeispielen erläutert.

Es zeigt:
- Fig. 1a: ein erstes Ausführungsbeispiel des erfindungsgemäßen Wandlersystems in einer perspektivischen Ansicht in der Gebrauchslage an einer Radanordnung eines Elektrofahrzeugs;
- Fig. 1b: das Ausführungsbeispiel aus Fig. 1a in einer zweiten perspektivischen Ansicht;
- Fig. 2: das Ausführungsbeispiel aus Fig. 1 in einer schematischen Schnittansicht entlang einer Antriebsachse;
- Fig. 3: ein zweites Ausführungsbeispiel des erfindungsgemäßen Wandlersystems in einer schematischen Schnittansicht entlang der Antriebsachse und
- Fig. 4: ein drittes Ausführungsbeispiel des erfindungsgemäßen Wandlersystems in einer schematischen Schnittansicht entlang der Antriebsachse.

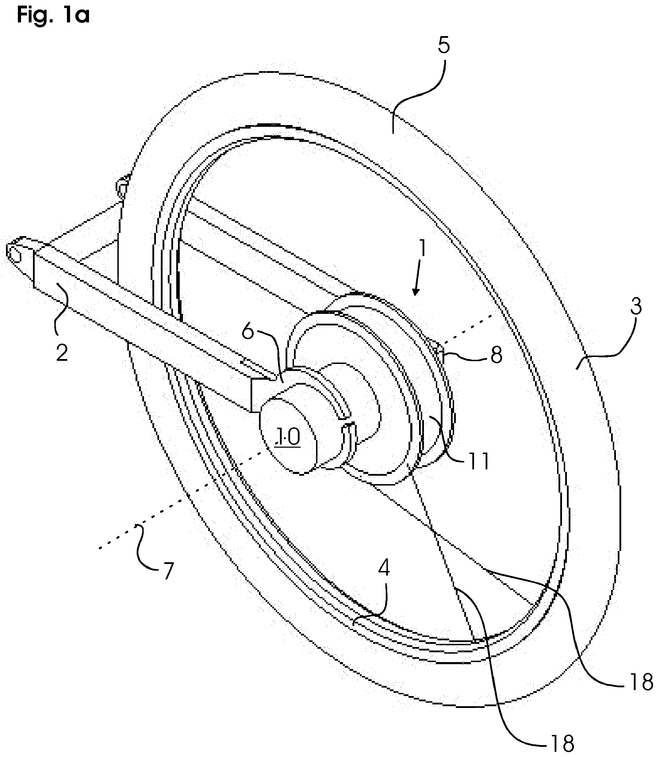

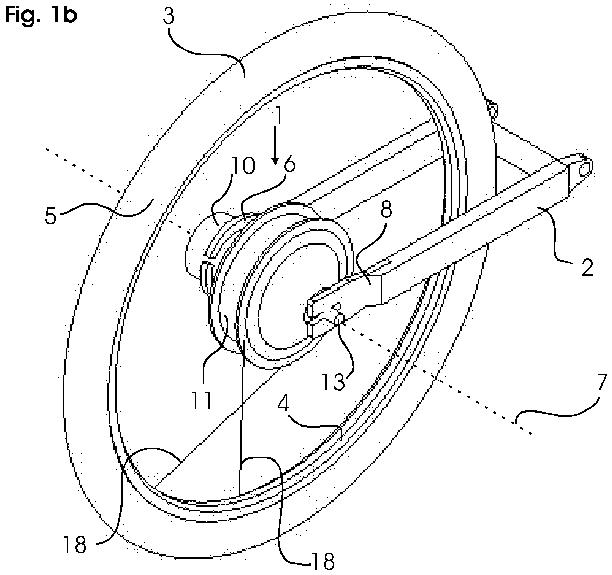

Die Figuren 1a und 1b zeigen ein erstes Ausführungsbeispiel eines erfindungsgemäßen Wandlersystems 1 in perspektivischen Ansichten. Das Wandlersystem 1 ist in den Figuren in der Gebrauchslage an einer Hinterradanordnung eines Elektrofahrzeugs - hier ein Elektromofa - gezeigt. Das Elektrofahrzeug umfasst einen Rahmen (nicht gezeigt), an dem eine Hinterradschwinge 2 befestigt ist. Wie gezeigt, ist die Hinterradschwinge 2 mit dem Rahmen verschraubbar ausgeführt, um eine leichte Montage und Demontage der Anordnung zu erlauben. Die Radanordnung weist ferner ein Laufrad 3 auf, welches vorliegend eine Felge und einen entsprechenden Schlauchreifen 5 aufweist.

Wie sich den Ansichten aus Fig. 1a und Fig. 1b entnehmen lässt, weist das Wandlersystem 1 ein Traggehäuse 10 auf, welches mit dem Rahmen des Elektrofahrzeugs über ein ringförmig ausgebildetes Ausfallende 6 der Hinterradschwinge 2 verbunden ist. Das Traggehäuse 10 ist zylindrisch ausgebildet und koaxial zu einer Antriebsachse 7 ausgerichtet. In axialer Richtung neben dem Traggehäuse 10 des Wandlersystems 1 ist ein Hohlrad 11 angeordnet, welches einerseits ein Planetengetriebe 12 (in Fig. 1a und 1b nicht gezeigt) aufnimmt und andererseits zur Verbindung mit dem Laufrad 3 ausgebildet ist. Das Hohlrad 11 ist hierbei als Nabenkörper ausgebildet und weist Aufnahmen (nicht gezeigt) für eine Mehrzahl von Speichen 18 auf, welche das Hohlrad 11 mit dem Laufrad 3 verbinden. Das Hohlrad 11 bzw. der Nabenkörper kann naturgemäß eine Bremsanlage und/oder Kettenblätter für eine Schaltung aufweisen, die jedoch aus Gründen der Übersicht hier nicht gezeigt sind.

Auf der dem Traggehäuse 10 gegenüberliegenden Seite des Hohlrads 11 ist das Wandlersystem 1 mit einer axial, d. h. entlang der Antriebsachse 7 angeordneten Tragachse 13 ausgeführt, welche in der Gebrauchslage in einem weiteren gabelartigen Ausfallende 8 der Hinterradschwinge 2 gehalten ist.

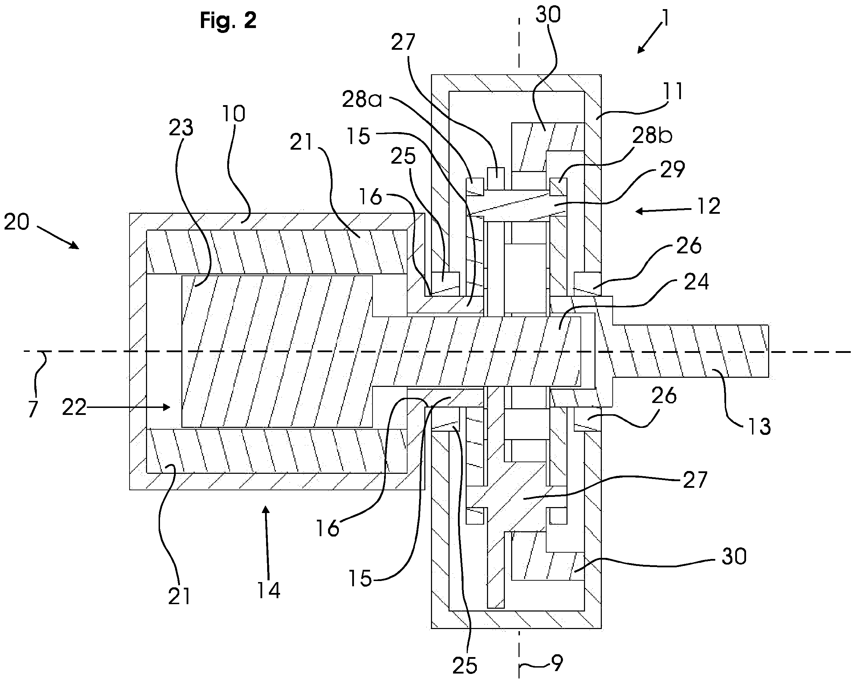

Der detaillierte Aufbau des vorliegenden ersten Ausführungsbeispiels des Wandlersystems 1 wird nachfolgend anhand der schematischen Ansicht der Fig. 2 erläutert. Hierbei zeigt Fig. 2 das Wandlersystem 1 in einer Schnittansicht entlang der Antriebsachse 7. Zur Übersicht sind die weiteren Komponenten des Elektrofahrzeugs, wie Hinterradschwinge 2 und Laufrad 3, in Fig. 2 nicht gezeigt.

Wie bereits eingangs mit Bezug zu den Fig. 1a und 1b erläutert, weist das Wandlersystem 1 gemäß des vorliegenden Ausführungsbeispiels drei wesentliche Baugruppen auf, nämlich Traggehäuse 10, Hohlrad 11 mit Planetengetriebe 12 und Tragachse 13. Das Traggehäuse 10 weist einen außerhalb der Radebene 9 angeordneten ersten Abschnitt 14 und einen axial neben dem ersten Abschnitt 14 angeordneten zweiten Abschnitt 15 auf. Wie gezeigt, weist der erste Abschnitt in einer Richtung, quer zur Antriebsachse 7, somit in einer Richtung parallel zur Radebene 9, einen größeren Durchmesser als der zweite Abschnitt 15 auf, was im Nachfolgenden noch detailliert erläutert wird.

Wie sich aus Fig. 2 ferner ergibt, ist das Traggehäuse 10 integral mit dem ersten und zweiten Abschnitt 14, 15 ausgebildet. Das Traggehäuse 10 weist eine rotationssymmetrische zylindrische Grundform auf und ist koaxial entlang der Antriebsachse 7 angeordnet. Gemäß des vorliegenden Beispiels besteht das Traggehäuse 10 aus rostfreiem Stahl.

Der erste Abschnitt 14 des Traggehäuses 10 nimmt einen elektromechanischen Energiewandler, nämlich gemäß dem vorliegenden Ausführungsbeispiel einen Motor 20 auf. Der Motor 20 weist einen koaxial im ersten Abschnitt 14 angeordneten hohlzylindrischen Stator 21 auf, der im vorliegenden Beispiel in aus dem Stand der Technik bekannter Weise mit mehreren elektrischen Spulen (nicht gezeigt) zur Erzeugung eines Magnetfelds ausgebildet ist. Der Motor 20 umfasst ferner einen um die Antriebsachse 7 drehbaren Rotor 22, welcher ein zylindrisch ausgebildetes Rotorrad 23 und eine sich axial vom Rotorrad 23 in den zweiten Abschnitt 15 des Traggehäuses 10 erstreckende Rotorwelle 24 aufweist.

Das Rotorrad 23 weist vorliegend Permanentmagnetenanordnungen auf, so dass im Betrieb, d. h. bei Versorgung der Spulen des Stators 21 mit einem elektrischen Strom, ein magnetisches Drehfeld erzeugt wird, welches den Rotor 22 antreibt.

Der Motor 20 ist im vorliegenden Fall als dreiphasiger, bürstenloser DC-Motor ausgebildet. Zur Übersicht sind die elektrischen Anschlüsse, ein gegebenenfalls notwendiger Kommutator, sowie eine Steuerungseinrichtung für den Motor 20 in den Figuren nicht gezeigt. Der Motor 20 weist in der vorliegenden Ausführung ein Dauerdrehmoment von ungefähr 1 bis 3 Nm auf und kann ein Spitzendrehmoment von 4 bis 10 Nm erzeugen. Dank des untersetzenden Getriebes 12 erreicht der Wandler 1 somit ein Dauerdrehmoment zwischen 30 bis 60 Nm sowie ein Spitzendrehmoment von ca. 100 Nm.

Wie sich Fig. 2 weiter entnehmen lässt, erstreckt sich die Rotorwelle 24 durch den zweiten Abschnitt 15 des Traggehäuses 10. Der zweite Abschnitt 15 ist hierbei mit einer axialen Durchgangsöffnung ausgebildet, deren Durchmesser nur leicht größer ist als der Durchmesser der Rotorwelle 24.

Der zweite Abschnitt 15 des Traggehäuses 10 dient somit einerseits der Durchführung der Rotorwelle 24 und somit der Übertragung einer Kraft bzw. eines Drehmoments vom Motor 20 an eine als Planetengetriebe 12 ausgebildete Kraftübertragungsvorrichtung. Der zweite Abschnitt 15 dient jedoch des Weiteren der drehbaren Lagerung des als Hohlrad 11 ausgebildeten Anschlusselements. Hierzu ist auf einer radialen Außenfläche 16 des zweiten Abschnitts 15 des Traggehäuses 10 ein Radiallager 25 befestigt. Der zweite Abschnitt 15 des Traggehäuses 10 dient somit im vorliegenden Fall der drehbaren Lagerung des Abtriebs des Wandlersystems 1. Hierbei ist der kleine Durchmesser des zweiten Abschnitts 15 des Traggehäuses 10 vorteilhaft, da somit übliche Radiallager 25 mit relativ kleinem Innendurchmesser von ca. 30 mm - 40 mm verwendet werden können.

Des Weiteren kann durch die relativ große Oberfläche des ersten Abschnitts 14 des Traggehäuses 10 die im Stator 21 im Betrieb entstehende Wärme gut abgeführt werden. Hierbei sorgt einerseits die Anordnung des ersten Abschnitts 14 des Traggehäuses 10 außerhalb der Radebene 9 für eine gute Kühlung des Motors 20 durch die Außenluft bzw. im Betrieb durch Fahrtwind und andererseits sorgt die ringförmige Kontaktfläche des Ausfallendes 6 der Hinterradschwinge 2 für einen guten thermischen Kontakt zwischen Traggehäuse 10 und dem Rahmen des Elektrofahrzeugs (nicht gezeigt), so dass die im Motor 20 erzeugte Wärme ebenfalls vorteilhaft über die Hinterradschwinge 2 und den Rahmen des Elektrofahrzeugs abgeführt werden kann.

Gemäß des vorliegenden Ausführungsbeispiels ist das Hohlrad 11 ferner über ein zweites Radiallager 26 an der Tragachse 13 gelagert. Die Tragachse 13 weist hierzu einen hohlzylindrisch ausgebildeten Lagerabschnitt auf, wobei der Durchmesser des Lagerabschnitts in einer Richtung, senkrecht zur Antriebsachse 7, dem Durchmesser des zweiten Abschnitts 15 des Traggehäuses 10 entspricht.

Die vorliegende Anordnung mit zwei Radiallagern 25, 26 stellt eine besonders vorteilhafte Lagerung des Hohlrades 11 und somit des mit dem Hohlrad verbundenen Laufrades 3 bereit, so dass insbesondere Querkräfte, bspw. bei Kurvenfahrten, sicher über Traggehäuse 10 und Tragachse 13 und die Hinterradschwinge 2 auf den Rahmen des Elektrofahrzeugs abgetragen werden können. Ferner erlaubt die Anordnung eine im Wesentlichen geschlossene Ausbildung des Hohlrades 11, so dass das im Hohlrad 11 angeordnete Planetengetriebe 12 und auch der Motor 20 vor Feuchtigkeit und Verschmutzungen geschützt sind, ohne dass besondere Abdichtungsmaßnahmen entlang der Rotorwelle 24 notwendig sind.

In der Gebrauchslage bei stromdurchflossenem Motor 20 erzeugt das zwischen Stator 21 und Rotor 22 wirkende Feld eine Kraft bzw. ein Drehmoment zum Antrieb des Hohlrades 11. Das erzeugte Drehmoment wird hierbei vom Rotor 22 auf das Planetengetriebe 12 und somit auf das Hohlrad 11 übertragen. Hierzu ist die Rotorwelle 24 integral mit einem axial angeordneten Sonnenrad (nicht gezeigt) mit Außenverzahnung ausgebildet. Die als Sonnenrad ausgebildete Rotorwelle 24 treibt über die Verzahnung des Sonnenrades insgesamt drei oder vier Planetenräder 27 an, die zum Eingriff mit dem Sonnenrad ebenfalls eine Außenverzahnung aufweisen. Die Planetenräder 27 sind drehbar zwischen einem ersten Planetenträger 28a und einem zweiten Planetenträger 28b gelagert. Die Drehachsen der Planetenräder 27 verlaufen parallel zur Antriebsachse 7. Wie sich der Fig. 2 insbesondere entnehmen lässt, ist der erste Planetenträger 28a mit dem zweiten Abschnitt 15 des Traggehäuses 10 und der zweite Planetenträger 28b mit dem Lagerabschnitt der Tragachse 13 drehmomentfest verbunden. Die Planetenräder 27 sind gleichmäßig auf dem Umfang der Planetenträger 28a, 28b angeordnet. Zur weiteren Stabilisierung sind in radialer Richtung zwischen den Planetenrädern 27 drei Stege 29 angeordnet, die die beiden Planetenträger 28a, 28b drehfest miteinander verbinden.

Abtriebsseitig greifen die Planetenräder 27 ferner in einen mit dem Hohlrad 11 drehfest verbundenen Zahnkranz 30 mit Innenverzahnung ein, welcher eine den Planetenrädern 27 entsprechende Innenverzahnung aufweist. Somit kann ein Antriebsdrehmoment des Motors 20 über Sonnenrad, Planetenräder 27 und Zahnkranz 30 auf das Hohlrad 11 übertragen und somit zum Antrieb des Laufrades 3 des Elektrofahrzeugs eingesetzt werden.

Das Planetengetriebe 12 ist als einstufiges Planetenstufengetriebe ausgebildet und weist somit zwei Getriebestufen auf. Durch die Anordnung des Antriebs am Sonnenrad und des Abtriebs am Hohlrad 11 erfolgt somit vorteilhaft eine Untersetzung bei einem Übersetzungsverhältnis von ca. 1:16. Das Übersetzungsverhältnis sollte zwischen 1:12 und 1:21 gewählt sein.

Zur Verbesserung des Wirkungsgrades kann das Hohlrad 11 ein Schmiermittel enthalten, so dass das Planetengetriebe 12 bzw. das Sonnenrad mindestens teilweise mit dem Schmiermittel benetzt ist. Hierdurch kann der Verschleiß im Planetengetriebe 12 vorteilhaft reduziert werden. Die Ausbildung des Wandlersystems 1 gemäß des vorliegenden Ausführungsbeispiels ist insbesondere in diesem Zusammenhang vorteilhaft, da die im Motor 20 erzeugte Wärme nur im geringen Maße über den zweiten Abschnitt 15 des Traggehäuses 10 auf das Hohlrad 11 und somit das Schmiermittel übertragen wird.

Ferner ist das vorliegende Ausführungsbeispiel des Wandlersystems 1 vorteilhaft, da die Anordnung den Einsatz des gezeigten zylindrisch aufgebauten Motors 20 erlaubt, weleher gegenüber scheibenartigen Motoren kostengünstiger herzustellen ist und trotzdem ein relativ hohes Drehmoment erzeugen kann.

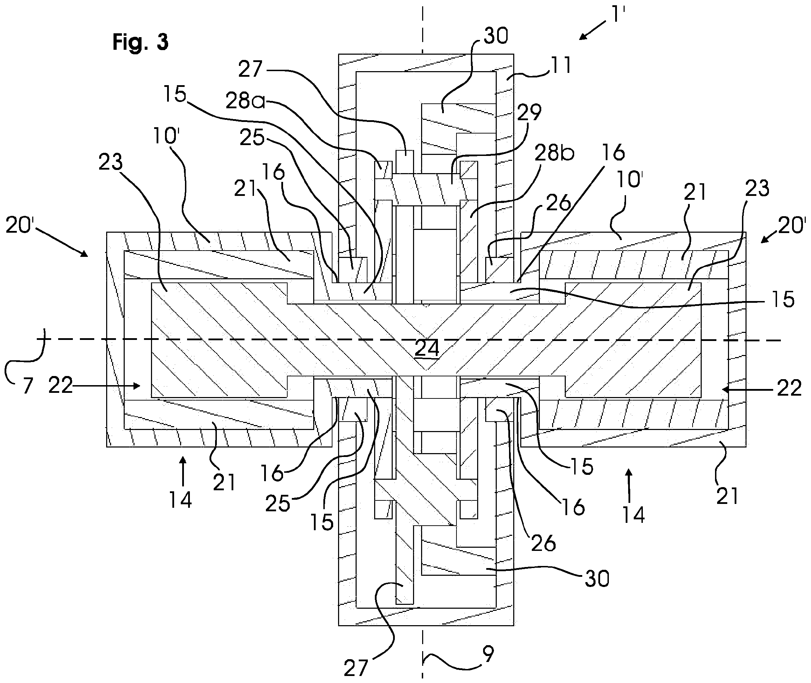

Für Anwendungen, in welchen ein besonders hohes Drehmoment benötigt wird, kann das Wandlersystem 1 alternativ mit mehreren Motoren 20 ausgebildet sein. Ein entsprechendes zweites Ausführungsbeispiel eines erfindungsgemäßen Wandlersystems 1' ist in Fig. 3 in einer, der Darstellung von Fig. 2 entsprechenden, schematischen Schnittansicht gezeigt.

Das zweite Ausführungsbeispiel des Wandlersystems 1' entspricht im Wesentlichen dem in Bezug auf die Fig. 1 und 2 erläuterten ersten Ausführungsbeispiel, wobei das Wandlersystem 1' gemäß Fig. 3 mit insgesamt zwei Motoren 20' ausgebildet ist. Die Motoren 20' sind im Verhältnis zu dem zuvor erläuterten Motor 20 kleiner ausgeführt, so dass eine kompaktere Bauform des Wandlersystems 1' resultiert.

Jeder der Motoren 20' ist in einem zugeordneten Traggehäuse 10' angeordnet, wobei der grundsätzliche Aufbau der Traggehäuse 10' mit erstem Abschnitt 14 und zweitem Abschnitt 15 dem zuvor mit Bezug auf die Fig. 1 und 2 erläuterten Ausführungsbeispiel entspricht.

Die Traggehäuse 10' und die Motoren 20' sind hierbei im Wesentlichen achsensymmetrisch zur Radebene 9 aufgebaut, wobei die Motoren 20' eine gemeinsame Rotorwelle 24 aufweisen. Die Motoren 20' sind wiederum als zylinderförmige, dreiphasige und bürstenlose DC-Motoren ausgebildet, der Antrieb des integral mit der Rotorwelle 24 ausgebildeten Sonnenrades (nicht gezeigt) erfolgt wie zuvor beschrieben.

Die Statoren 21 und die Rotoren 22 der Motoren 20' sind hierbei mechanisch so ausgerichtet, dass keine Phasenverschiebung der induzierten Spannungen auftritt. Es ist somit möglich, mit lediglich einer Steuerungseinheit bzw. Leistungselektronik (nicht gezeigt) beide Motoren 20' anzusteuern. Hierzu kann bspw. ein Sensor zur Rotorlageerkennung angeordnet sein, der mit der Steuerungseinrichtung verbunden ist. Der elektrische Anschluss und die Kontaktierung der einzelnen Motorphasen ist so ausgeführt, dass elektrische Symmetrie herrscht und somit keine oder nur minimale Ausgleichsströme zwischen den Motoren auftreten.

Gegenüber dem zuvor erläuterten Ausführungsbeispiel gemäß der Figuren 1 und 2 ist vorliegend das Verhältnis von Oberfläche zu Volumen der Traggehäuse 10' verbessert, d. h. die in den Motoren 20' erzeugte Wärme kann verbessert an die Außenluft bzw. die Hinterradschwinge 2 abgegeben werden. Daher können die Motoren dauerhaft mit hohen Strömen betrieben werden, so dass ein hohes Dauerdrehmoment möglich ist.

Die eingangs erwähnte Steuerungseinheit (nicht gezeigt) kann bei einer Anordnung mit mehreren Motoren 20' insbesondere dazu ausgebildet sein, einen stetigen Stromverlauf mit nur begrenzten Ripple zu erzeugen. Die Steuerungseinheit kann bspw. eine feldorientierte Regelung aufweisen, hierbei erlaubt eine Regelung mit sogenannter "Feldschwächung" einen großen Geschwindigkeitsbereich, so dass ggf. auf ein Schaltgetriebe verzichtet werden kann. Die Steuerungseinrichtung kann in einem länglichen Gehäuse (nicht gezeigt) auf der Innenseite oder Außenseite der Hinterradschwinge 2 untergebracht sein, was eine unkomplizierte Wartung erlaubt.

Die Steuerungseinrichtung kann ferner dazu ausgebildet sein, das Laufrad 3 frei auslaufen zu lassen. Hierzu kann die Steuerungseinrichtung eine elektronische Freilaufschaltung aufweisen. Die elektronische Freilaufschaltung ist parametrierbar und erlaubt, entweder zur Kompensation von Leerlaufverlusten die Motoren 20' in begrenztem Maße anzutreiben oder leicht zu bremsen, so dass elektrisch gebremst und entsprechend Energie rekuperiert werden kann.

In einer nicht gezeigten, alternativen Ausführung sind die Rotoren 22 und Statoren 21 der Motoren 20' um eine halbe Polteilung räumlich verdreht. Diese Maßnahme führt zu wenig Drehmomentwelligkeit, wie bei Anwendung eines vielpoligen Motors, ist aber weniger kostenintensiv, da bloß eine Steuerungseinrichtung für bspw. dreiphasige Motoren 20' verwendet werden kann.

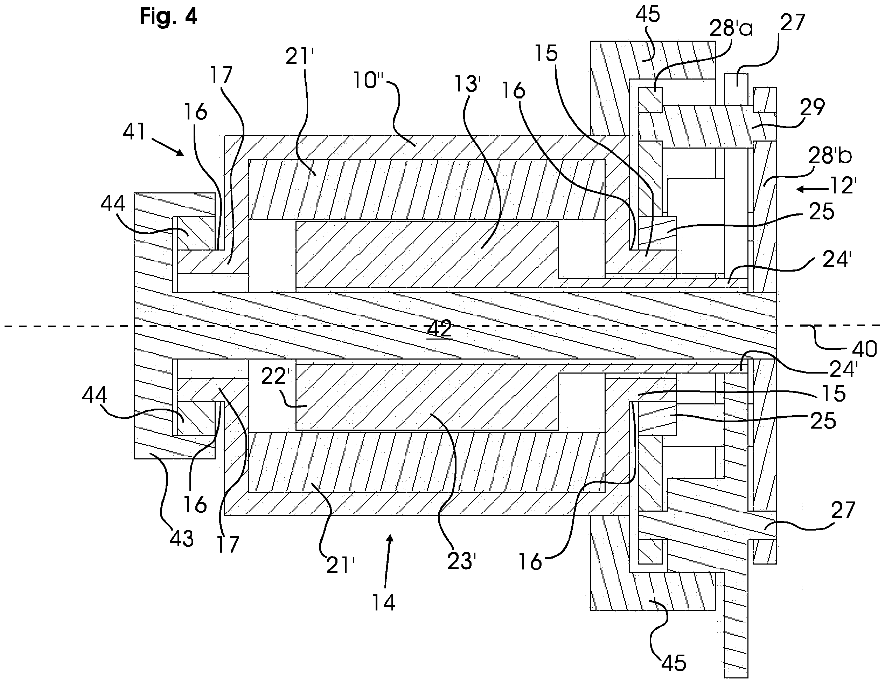

Ein alternatives, drittes Ausführungsbeispiel eines erfindungsgemäßen Wandlersystems 1" ist in einer schematischen Schnittansicht in Fig. 4 gezeigt. Das Wandlersystem 1" gemäß des vorliegenden Ausführungsbeispiels ist als Tretgenerator, bzw. -motor zur Aufnahme im Tretlagerbereich bspw. eines Elektrofahrrades ausgebildet.

Die schematische Ansicht des Wandlersystems 1" ist hierbei entlang einer Antriebs- bzw.Tretachse 40 geschnitten dargestellt. Die vorliegende Anordnung als Tretlagergenerator bzw. -motor ist insbesondere für ein Serie Hybrid Elektrofahrzeug einsetzbar, d. h. ein Fahrzeug, bei dem der Antrieb per pedes und unterstützend mittels eines batteriegespeisten Elektromotors erfolgen kann.

Das Ausführungsbeispiel des Wandlersystems 1" gemäß Fig. 4 entspricht hierbei weitgehend den zuvor mit Bezug auf die Figuren 1-3 erläuterten Ausführungsbeispielen; korrespondierende Bauteile bzw. -gruppen sind daher mit identischen Ziffern bezeichnet.

Wie zuvor erläutert, weist das Wandlersystem 1" auch gemäß des vorliegenden Ausführungsbeispiels ein Traggehäuse 10" mit einem ersten Abschnitt 14 und einem zweiten Abschnitt 15 auf. Im ersten Abschnitt 14 des Traggehäuses 10 ist vorliegend ein Tretgenerator 41 angeordnet, der einen hohlzylindrischen Stator 21' und einen Rotor 22' aufweist. Der Rotor 22 ist auch hier mit einem Rotorrad 23' und einer Rotorwelle 24' ausgeführt. Gegenüber den zuvor erläuterten Ausführungsbeispielen ist der Rotor 22' jedoch entlang der Tretachse 40 mit einem axial durchgehenden Hohlraum ausgebildet. Im Hohlraum, und somit koaxial zum Rotor 22', ist eine als Tretachse ausgebildete Antriebswelle 42 angeordnet. Die Antriebswelle 42 ist zur endseitigen Verbindung mit entsprechenden Tretpedalen (nicht gezeigt) ausgebildet. Hierzu weist die Antriebswelle 42 einen Verbindungsabschnitt 43 auf, der vorliegend an einer radialen Außenfläche 16 eines dritten Abschnitts 17 des Traggehäuses über ein weiteres Radiallager 44 gelagert ist. Auf der dem dritten Abschnitt 17 des Traggehäuses 10" gegenüberliegenden Seite ist die Antriebswelle 42 mit einem als Planetenträger 28'b verbundenen Anschlusselement integral ausgebildet. Der Planetenträger 28'b ist vorliegend zur Verbindung mit einem weiteren Tretpedal (nicht gezeigt) ausgebildet und ist drehfest, wie zuvor erläutert, über drei Stege 29 mit dem Planetenträger 28'a verbunden.

In dem vorliegenden Anwendungsfall des Wandlersystems 1" als Tretgenerator erfolgt der Antrieb per pedes über die mit der Antriebswelle 42 verbundenen Tretpedale (nicht gezeigt). Somit erfolgt der Antrieb über die mit der Antriebswelle drehfest verbundenen Planetenträger 28'a und 28'b. Der Planetenträger 28'a, 28'b ist hier über das Radiallager 25 an der radialen Außenfläche 16 des zweiten Abschnitts 15 des Traggehäuses 10" gelagert.

Gemäß Figur 4 weisen die Radiallager 25, 44 einen kleineren Durchmesser als der erste Abschnitt 14 des Traggehäuses 10" auf. Im Betrieb treiben die Planetenträger 28'a, 28'b drei radial gleichmäßig beabstandete Planetenräder 27 an, welche zwischen einem drehfest mit dem Traggehäuse 10" verbundenen, innenverzahnten Getriebegehäuse 45 und dem integral mit der Rotorwelle 24' ausgebildeten Sonnenrad (nicht gezeigt) ablaufen und somit im Betrieb eine Kraft bzw. ein Drehmoment von den Planetenträgern 28'a, 28'b auf den Rotor 22' des Tretgenerators 41 übertragen. Hierdurch wird der Rotor 22' angetrieben, wodurch zwischen Rotorrad 23' und Stator 21' wiederum ein magnetisches Feld entsteht und ein elektrischer Strom im Generator 41 erzeugt wird.

Die im Betrieb erzeugte elektrische Energie kann direkt im Motor, oder, falls dieser gerade keine Leistung aufnimmt, bspw. in einer Batterie bzw. in einem Akkumulator gespeichert werden und bei Bedarf einer bspw. gemäß der Figuren 1-3 ausgebildeten Antriebsanordnung zugeführt werden.

Die Erfindung wurde vorstehend anhand von Ausführungsbeispielen erläutert. Die Erfindung ist jedoch nicht auf die vorstehenden Ausführungen beschränkt. Insbesondere erlauben die erläuterten Ausführungsbeispiele zahlreiche Änderungen oder Ergänzungen. Bspw. ist es denkbar, dass
- der Tretgenerator 41 gemäß des Ausführungsbeispiels nach Fig. 4 als Tretlagermotor betreibbar ist,
- die Antriebswelle 42 eine oder mehrere Kettenblätter aufweist, welche zur Verbindung mit einem Ritzel am Hinterrad des Fahrzeugs mittels einer Kette oder eines Zahnriemens ausgebildet sind,
- im Ausführungsbeispiel der Figuren 1 bis 2 das Wandlersystem 1 nicht beidseitig mit der Schwinge 2 verbunden ist, sondern lediglich über das Traggehäuse 10, bspw. für eine Anwendung in drei- und vierrädrigen Fahrzeugen,

- in sämtlichen vorstehenden Ausführungsbeispielen ein mechanischer oder elektronischer Freilauf vorgesehen ist,
- eine Bremseinheit, Schaltung und/oder Kupplung zwischen Rotor 22, 22' und Planetengetriebe 12, 12' bzw. Hohlrad 11 vorgesehen ist,
- in den Ausführungsbeispielen gemäß Figuren 1 bis 3, das Hohlrad 11 integral mit einem Laufrad 3 des Elektrofahrzeugs ausgebildet ist,
- das Traggehäuse 10 mindestens teilweise aus Kunststoff oder Aluminium gebildet ist,
- der erste 14 und zweite Abschnitt 15 des Traggehäuses mittels einer Verschraubung oder einem Schnellverschluss miteinander verbunden sind, und/oder
- der Motor 20 als Synchronmaschine (PMSM) ausgebildet ist,

## Patentansprüche

1. Elektromechanisches Wandlersystem für ein Elektrofahrzeug, insbesondere ein Elektroleichtfahrzeug, aufweisend
- ein Traggehäuse (10, 10', 10") zur Verbindung mit dem Fahrzeug,
- einen mindestens teilweise im Traggehäuse (10, 10', 10") angeordneten elektromechanischem Energiewandler mit mindestens einem Stator (21, 21') und einem um eine Antriebsachse (7, 40) gegenüber dem Stator (21,21') drehbaren Rotor (22, 22'), und
- eine Kraftübertragungsvorrichtung, die den Rotor (22, 22') mit einem Anschlusselement verbindet, wobei
- das Traggehäuse (10, 10', 10") mindestens einen ersten axialen Abschnitt (14) und einen zweiten axialen Abschnitt (15) aufweist,
- der erste Abschnitt (14) in einer Richtung, quer zur Antriebsachse (7, 40), einen größeren Durchmesser als der zweite Abschnitt (15) aufweist,
- Stator (21, 21') und Rotor (22, 22') mindestens teilweise im ersten Abschnitt (14) des Traggehäuses (10, 10', 10") angeordnet sind und
- der zweite Abschnitt (15) zur Lagerung des Rotors (22, 22') und/oder des Anschlusselements ausgebildet ist,
wobei der erste Abschnitt (14) des Traggehäuses (10, 10', 10") Befestigungsmittel zur Verbindung mit dem Elektrofahrzeug aufweist und außerhalb der Radebene (9) angeordnet ist, so dass im elektromechanischen Energiewandler erzeugte Wärme an die Außenluft und über den Fahrzeugrahmen abgeführt wird,
wobei der zweite Abschnitt (15) des Traggehäuses (10, 10', 10") eine radiale Außenfläche (16) aufweist, die zur Lagerung des Anschlusselements ausgebildet ist.

2. Wandlersystem nach Anspruch 1, wobei der zweite Abschnitt (15) des Traggehäuses (10, 10', 10") eine axiale Durchgangsöffnung und der Rotor (22, 22') eine Rotorwelle (24, 24') aufweist und wobei sich die Rotorwelle (24, 24') durch die Öffnung erstreckt.

3. Wandlersystem nach einem der vorangehenden Ansprüche, wobei eine Lagereinheit vorgesehen ist, die das Anschlusselement am zweiten Abschnitt (15) des Traggehäuses (10, 10', 10") drehbar lagert.

4. Wandlersystem nach einem der vorangehenden Ansprüche, wobei Traggehäuse (10, 10', 10") und Kraftübertragungsvorrichtung entlang der Antriebsachse (7, 40) derart angeordnet sind, dass sich die Rotorwelle (24, 24') axial in die Kraftübertragungsvorrichtung erstreckt.

5. Wandlersystem nach einem der vorangehenden Ansprüche, wobei die Kraftübertragungsvorrichtung ein Planetengetriebe (12, 12') mit mindestens einem axial angeordneten Sonnenrad aufweist.

6. Wandlersystem nach Anspruch 5, wobei Rotorwelle (24, 24') und Sonnenrad integral ausgebildet sind.

7. Wandlersystem nach einem der Ansprüche 5 oder 6, wobei das Anschlusselement ein koaxial zum Sonnenrad angeordnetes Hohlrad (11) aufweist, welches zur Übertragung eines Drehmoments mit dem Sonnenrad in Eingriff steht.

8. Wandlersystem nach Anspruch 7, wobei das Hohlrad (11) Befestigungsmittel zur Verbindung mit einer Radanordnung des Elektrofahrzeugs aufweist.

9. Wandlersystem nach einem der vorangehenden Ansprüche, wobei das Anschlusselement eine Antriebswelle (42) aufweist, die mindestens abschnittsweise in einem im Rotor (24, 24') gebildeten axialen Hohlraum angeordnet ist.

10. Wandlersystem nach Anspruch 9, wobei das Traggehäuse (10, 10', 10") ferner einen dritten axialen Abschnitt (17) mit mindestens einer zweiten Lagereinheit aufweist und wobei die zweite Lagereinheit die Antriebswelle (42) drehbar am dritten Abschnitt (17) des Traggehäuses (10, 10', 10") lagert.

11. Wandlersystem nach Anspruch 10, wobei der dritte Abschnitt (17) an einer axial gegenüberliegend zur Kraftübertragungsvorrichtung angeordneten Seite des Traggehäuses (10, 10', 10") angeordnet ist.

12. Wandlersystem nach einem der vorangehenden Ansprüche, wobei mindestens ein erstes und ein zweites Traggehäuse (10, 10', 10") mit jeweils einem Energiewandler vorgesehen sind und das erste und zweite Traggehäuse (10, 10', 10") entlang der Antriebsachse (7, 40) und durch die Kraftübertragungsvorrichtung beabstandet angeordnet sind.

13. Elektrofahrzeug, insbesondere Elektroleichtfahrzeug, mit einem Wandlersystem (1, 1', 1") nach einem der vorangehenden Ansprüche.

## Claims

1. Electromechanical converter system for an electric vehicle, in particular a lightweight electric vehicle, comprising
- a support housing (10, 10', 10") for connection to the vehicle,
- an electromechanical energy converter that is arranged at least partially in the support housing (10, 10', 10") and comprises at least one stator (21, 21') and one rotor (22, 22') that can rotate about a drive axis (7, 40) with respect to the stator (21, 21'), and
- a power transmission device, which connects the rotor (22, 22') to a connecting element, wherein
- the support housing (10, 10', 10") has at least one first axial section (14) and one second axial section (15),
- the first section (14) has a greater diameter than the second section (15) in a direction transverse to the drive axis (7, 40),
- the stator (21, 21') and the rotor (22, 22') are arranged at least partially in the first section (14) of the support housing (10, 10', 10") and
- the second section (15) is designed to bear the rotor (22, 22') and/or the connecting element,
wherein the first section (14) of the support housing (10, 10', 10") has fastening means for connection to the electric vehicle and is arranged outside the wheel plane (9) such that heat generated in the electromechanical energy converter is dissipated into the outside air and via the vehicle chassis,
wherein the second section (15) of the support housing (10, 10', 10") comprises a radial outer surface (16) that is designed to bear the connecting element.

2. Converter system according to claim 1, wherein the second section (15) of the support housing (10, 10', 10") comprises an axial through-opening and the rotor (22, 22') comprises a rotor shaft (24, 24') and wherein the rotor shaft (24, 24') extends through the opening.

3. Converter system according to one of the preceding claims, wherein a bearing unit is provided which supports the connecting element on the second section (15) of the support housing (10, 10', 10") such that said connecting element can rotate.

4. Converter system according to any of the preceding claims, wherein the support housing (10, 10', 10") and the power transmission device are arranged along the drive axis (7, 40) such that the rotor shaft (24, 24') extends axially into the power transmission device.

5. Converter system according to any of the preceding claims, wherein the power transmission device has an epicyclic gear train (12, 12') with at least one axially arranged sun gear.

6. Converter system according to claim 5, wherein the rotor shaft (24, 24') and the sun gear are integrally formed.

7. Converter system according to any of claims 5 or 6, wherein the connecting element comprises an internal gear (11) that is arranged coaxially with the sun gear and engages with the sun gear so as to transmit a torque.

8. Converter system according to claim 7, wherein the internal gear (11) comprises fastening means for connection to a wheel assembly of the electric vehicle.

9. Converter system according to any of the preceding claims, wherein the connecting element comprises a drive shaft (42) which is arranged at least in sections in an axial cavity formed in the rotor (24, 24').

10. Converter system according to claim 9, wherein the support housing (10, 10', 10") further has a third axial section (17) with at least one second bearing unit and wherein the second bearing unit supports the drive shaft (42) on the third section (17) of the support housing (10, 10', 10") such that said drive shaft can rotate.

11. Converter system according to claim 10, wherein the third section (17) is arranged on a side of the support housing (10, 10', 10") that is arranged axially opposite the power transmission device.

12. Converter system according to any of the preceding claims, wherein at least one first and one second support housing (10, 10', 10") each comprising an energy converter are provided and the first and second support housing (10, 10', 10") are arranged along the drive axis (7, 40) and separated by means of the power transmission device.

13. Electric vehicle, in particular a lightweight electric vehicle, with a converter system (1, 1', 1") according to any of the preceding claims.

## Revendications

1. Système convertisseur électromécanique pour un véhicule électrique, en particulier un véhicule léger électrique, présentant
- un boîtier de support (10, 10', 10") pour l'assemblage avec le véhicule,
- un convertisseur d'énergie électromécanique disposé au moins partiellement dans le boîtier de support (10, 10', 10"), avec au moins un stator (21, 21') et un rotor (22, 22') rotatif autour d'un axe d'entraînement (7, 40) par rapport au stator (21, 21'), et
- un dispositif de transmission de force reliant le rotor (22, 22') à un élément de raccordement, dans lequel
- le boîtier de support (10, 10', 10") présente au moins une première section axiale (14) et une deuxième section axiale (15),
- la première section (14) présente un diamètre supérieur à celui de la deuxième section (15) dans une direction transversale à l'axe d'entraînement (7, 40),
- le stator (21, 21') et le rotor (22, 22') sont disposés au moins partiellement dans la première section (14) du boîtier de support (10, 10', 10"), et
- la deuxième section (15) est conçue pour supporter le rotor (22, 22') et/ou l'élément de raccordement,
dans lequel la première section (14) du boîtier de support (10, 10', 10") présente des moyens de fixation pour l'assemblage avec le véhicule électrique, tout en étant disposée à l'extérieur du plan des roues (9), de telle façon que la chaleur générée dans le convertisseur d'énergie électromécanique est évacuée vers l'air extérieur et par le châssis de véhicule,
dans lequel la deuxième section (15) du boîtier de support (10, 10', 10") présente une surface extérieure radiale (16) conçue pour supporter l'élément de raccordement.

2. Système convertisseur selon la revendication 1, dans lequel la deuxième section (15) du boîtier de support (10, 10', 10") présente une ouverture de passage axiale et le rotor (22, 22') présente un arbre de rotor (24, 24'), et dans lequel l'arbre de rotor (24, 24') s'étend à travers l'ouverture.

3. Système convertisseur selon l'une des revendications précédentes, dans lequel il est prévu une unité de palier supportant l'élément de raccordement de façon rotative sur la deuxième section (15) du boîtier de support (10, 10', 10").

4. Système convertisseur selon l'une des revendications précédentes, dans lequel le boîtier de support (10, 10', 10") et le dispositif de transmission de force sont disposés de telle façon le long de l'axe d'entraînement (7, 40), que l'arbre de rotor (24, 24') s'étend axialement dans le dispositif de transmission de force.

5. Système convertisseur selon l'une des revendications précédentes, dans lequel le dispositif de transmission de force présente un engrenage planétaire (12, 12') avec au moins une roue solaire disposée axialement.

6. Système convertisseur selon la revendication 5, dans lequel l'arbre de rotor (24, 24') et la roue solaire sont formés intégralement.

7. Système convertisseur selon l'une des revendications 5 ou 6, dans lequel l'élément de raccordement présente une couronne (11) disposée coaxialement à la roue solaire, laquelle engrène avec la roue solaire pour transmettre un couple de rotation.

8. Système convertisseur selon la revendication 7, dans lequel la couronne (11) présente des moyens de fixation pour l'assemblage avec un ensemble de roues du véhicule électrique.

9. Système convertisseur selon l'une des revendications précédentes, dans lequel l'élément de raccordement présente un arbre d'entraînement (42) disposé au moins par tronçons dans un espace creux axial formé dans le rotor (24, 24').

10. Système convertisseur selon la revendication 9, dans lequel le boîtier de support (10, 10', 10") présente en outre une troisième section axiale (17) avec au moins une deuxième unité de palier, et dans lequel la deuxième unité de palier supporte l'arbre d'entraînement (42) de façon rotative sur la troisième section (17) du boîtier de support (10, 10', 10").

11. Système convertisseur selon la revendication 10, dans lequel la troisième section (17) est disposée sur un côté du boîtier de support (10, 10', 10") axialement opposé au dispositif de transmission de force.

12. Système convertisseur selon l'une des revendications précédentes, dans lequel il est prévu au moins un premier et un deuxième boîtier de support (10, 10', 10") avec un convertisseur d'énergie respectif, et les premier et deuxième boîtiers de support (10, 10', 10") sont disposés le long de l'axe d'entraînement (7, 40) et espacés par le dispositif de transmission de force.

13. Véhicule électrique, en particulier un véhicule léger électrique, comprenant un système convertisseur (1, 1', 1") selon l'une des revendications précédentes.
